# EUROPEAN PATENT SPECIFICATION

(11) **EP 1 072 448 B1**
(45) Date of publication and mention of the grant of the patent: **21.07.2004**
(21) Application number: 00106418.7
(22) Date of filing: 24.03.2000
(51) Int. Cl.: B60C 27/10, B60C 27/12

(54) **Self-tensioning device for snow chains**
Automatische Spannvorrichtung für Schneeketten
Tendeur automatique pour chaînes à neige

(30) Priority: 26.07.1999 IT MI991646
(43) Date of publication of application: 31.01.2001
(73) Proprietor: König S.p.A., 23847 Molteno (Lecco) (IT)
(72) Inventor: Airoldi, Romolo, 23900 Lecco (IT); Arrigoni Neri, Marco, 23811 Ballabio (Lecco) (IT)
(74) Representative: Petruzziello, Aldo

(56) References cited:
- EP-A- 0 255 119
- EP-A- 1 024 035
- WO-A-98/39168
- CA-A- 1 268 693
- DE-A- 3 906 486

## Description

The present invention relates to a self-tensioning device for snow chains or anti-skid devices intended to be mounted on vehicle tires.

When a vehicle is on a road surface covered with snow, sleet or ice, its tires do not have a good grip and dangerous swerving or skidding of the vehicle can occur. To avoid these problems it is customary to use anti-skid devices, commonly called snow chains.

Snow chains, normally mounted on the driving wheels of the vehicle, bite into the snow and/or ice deposited on the road surface, increasing the traction on the tread and allowing the vehicle tires to achieve a good grip.

As it is known, a snow chain generally comprises two side elements (chains, flexible cables, steel wires, ropes or the like) which during use are closed in a ring on the inner side and the outer side of the wheel, respectively. These side elements are connected by a series of chain portions variously disposed to achieve friction on the tread, the whole being completed by a device for applying tension to said elements, known as a tensioner.

This tensioning device normally consists of an elastic ring provided with a series of hooks that are fixed at various points of the outer side of the chain or of a chain-tensioning chain or else of one or more cams or levers.

The market demands tensioning devices that are increasingly fast and easy to mount, reduce the risk of injury to the user, ensure secure fixing of the chains and limit wear on the tires and wheel rims of the vehicle.

In fact the classical ring-type tensioning device, for example, requires fixing of a considerable number of hooks to the links of the chain, which, besides complicating the mounting operation, can cause injury to the user's hand should the chain slip from his hands during use.

Other tensioning devices comprise a terminal portion of chain of the outer ring-like element that is passed in a non-return block which allows pulling of said terminal chain in one direction and prevents any movement in the other direction. The terminal portion of chain is pulled as far as possible by the user and hooked to the outer ring element of the anti-skid device.

The system does not permit good tensioning of the anti-skid device. In fact the portions of chain connecting the inner ring element to the outer ring element that are situated at the bottom of the tire come to rest against the tread and cannot be adequately tensioned.

As a result, when the user starts the vehicle, after having travelled a hundred metres or so, he will feel the chains slacken; consequently, to avoid possible damage, the user will be obliged to stop the vehicle, get out and tighten up the chains.

These problems are solved by a self-tensioning device for snow chains described in European patent application No. 99830031, non yet published, by the same applicant. In European patent application No. 99830031, a self-tensioning device is described in which one end of the outer ring-like element of the snow chains is hooked to a non-return block and the other end comprises a free terminal portion. The terminal portion is passed through the non-return block which allows it to be pulled in one direction only and not in the opposite direction. In this manner, by pulling the terminal portion, it is possible to tension the chains and once the terminal portion is released, the non-return block avoids slackening of the chains.

A storage block containing an elastic element is provided on the outer ring-like element. Said elastic element is pulled out of the storage block by means of traction and is hooked to the end of the terminal portion. Thanks to the elastic return force of the elastic element and to suitable anti-friction sliding means, sliding system such as pulleys or the like, positioned inside the storage block, the elastic element is returned inside the storage block carrying with it the terminal portion and thus ensuring self-tensioning of the snow chains.

A self-tensionning device according to the preamble of claim 1 is disclosed in EP-A-1 024 035.

This system appears to be extremely simple and practical for the user who must hook only the hook of the elastic element to the end of the terminal portion and does not have to exert excessive traction on the terminal portion because said traction is exerted by the return of the elastic element. This system, however, proves to have a certain structural complexity due to the rotating pulleys situated inside the storage block.

The object of the invention is to eliminate the drawbacks of known tensioning devices, and to create a tensioning device for snow chains that is simple to make, ensures continuous, safe tensioning of the chains, and is extremely practical, simple and safe for the user to mount.

This object is achieved according to the invention having the characteristics listed in appended independent claim 1.

Preferred embodiments of the invention will become apparent from the dependent claims.

The self-tensioning device for snow chains provides a storage block having a spiral-shaped seat inside which is wrapped an elastic element which must be hooked to an end of a terminal portion of the outer ring which passes into a non-return block. According to the invention, the storage block does not have any sliding elements such as pulleys or the like, for example, and allows a substantially longer portion of elastic element to be accommodated compared with the storage blocks of the prior art. In fact the elastic element, being wound in a spiral inside the storage block, exploits the space available inside the storage block to the utmost.

In a further embodiment of the invention the elastic element winds in superimposed coils around a cylindrical tang made inside the storage block. Around part of the cylindrical tang there can be a rotating ring whose surface of contact with the cylindrical tang can be made of anti-friction material, for example of Teflon. The elastic element therefore winds around said rotating ring remaining in close contact therewith.

When the free end of the elastic element is pulled, the rotating ring turns in one direction allowing the elastic element to be drawn out the storage block. When traction is discontinued, through the action of the elastic force, the rotating ring turns in the opposite direction, allowing the elastic element to return inside the storage block.

Further characteristics of the invention will be made clearer by the detailed description that follows, referring to purely exemplary and therefore non-limiting embodiments thereof, illustrated in the appended drawings, in which:
Figure 1 is a front view of the self-tensioning device, taken from the outer side of the wheel, in which the elastic element is stretched and the chains applied to the wheel are slack;
Figure 2 is a view, like Figure 1, of the self-tensioning device, with the elastic element retracted and the chains applied to the wheel tensioned;
Figure 3 is an enlarged view of a detail of the self-tensioning device of Figures 1 and 2;
Figure 4 is a partially exploded view of the self-tensioning device in Figure 3, with a storage block according to a first embodiment of the invention;
Figure 5 is a plan view of a half of the storage block in Figure 4 when open, with the elastic element gathered therein according to a first embodiment of the invention;
Figure 6 is a plan view of a storage block according to a second embodiment of the invention;
Figure 7 is a plan view of a half of the storage block in Figure 6, with the elastic element gathered therein;
Figure 8 is a section of the storage block along the plane of section VIII-VIII in Figure 7.

The self-tensioning device according to the invention is described with the aid of the figures.

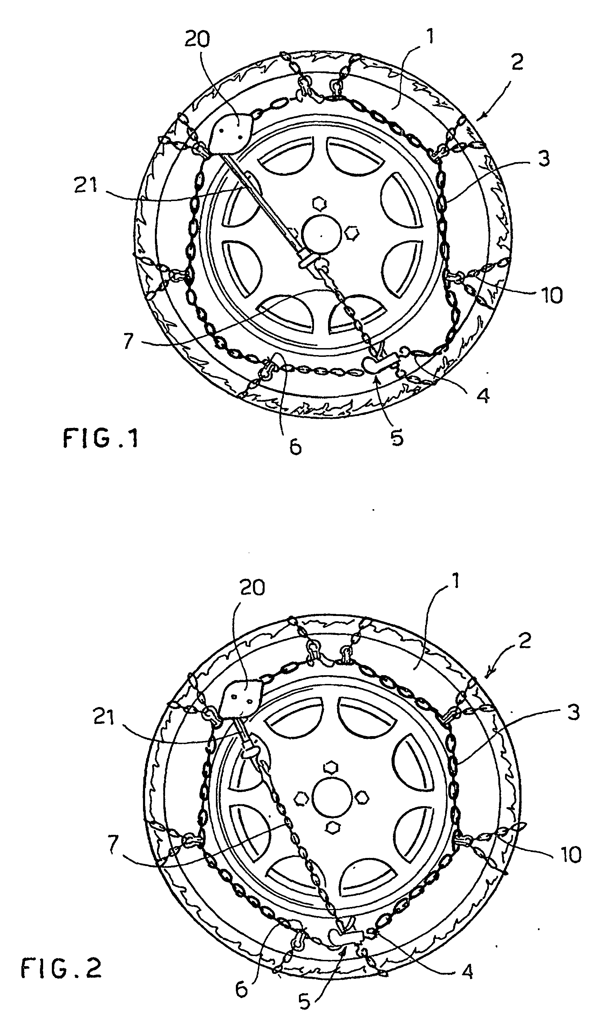

Figures 1 and 2 show a wheel 1 of a vehicle on which a snow chain, denoted as a whole by reference numeral 2, is applied as an anti-skid device.

The chain 2 comprises: an element (not shown) closed in a circle or ring on an inner part of the wheel, an element 3 disposed in a circle or ring on an outer part of the wheel and a series of portions 10 of anti-skid chain, disposed transversally on the tread, which join the outer element 3 and the inner element.

The outer ring 3 is hooked at one end 4 to a non-return block 5 and is connected at its other end 6 to a terminal portion of chain 7. The terminal portion 7 can also be made of plastic material or any other suitable material to avoid possible damage to the rim 8 of the wheel, following rubbing therewith.

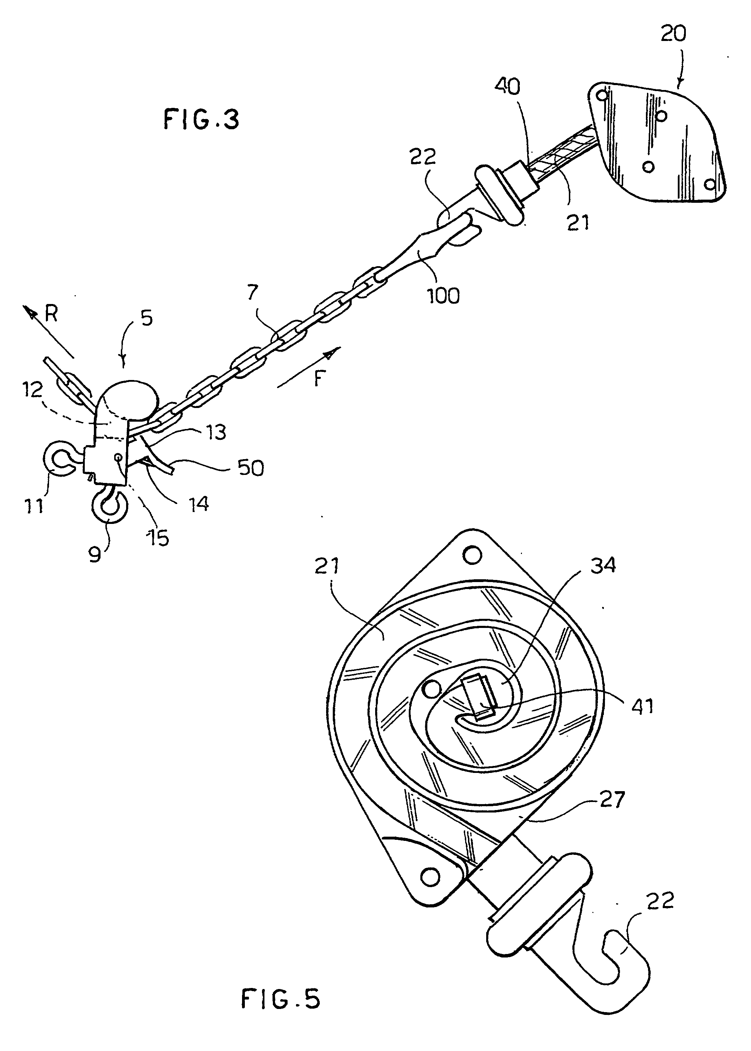

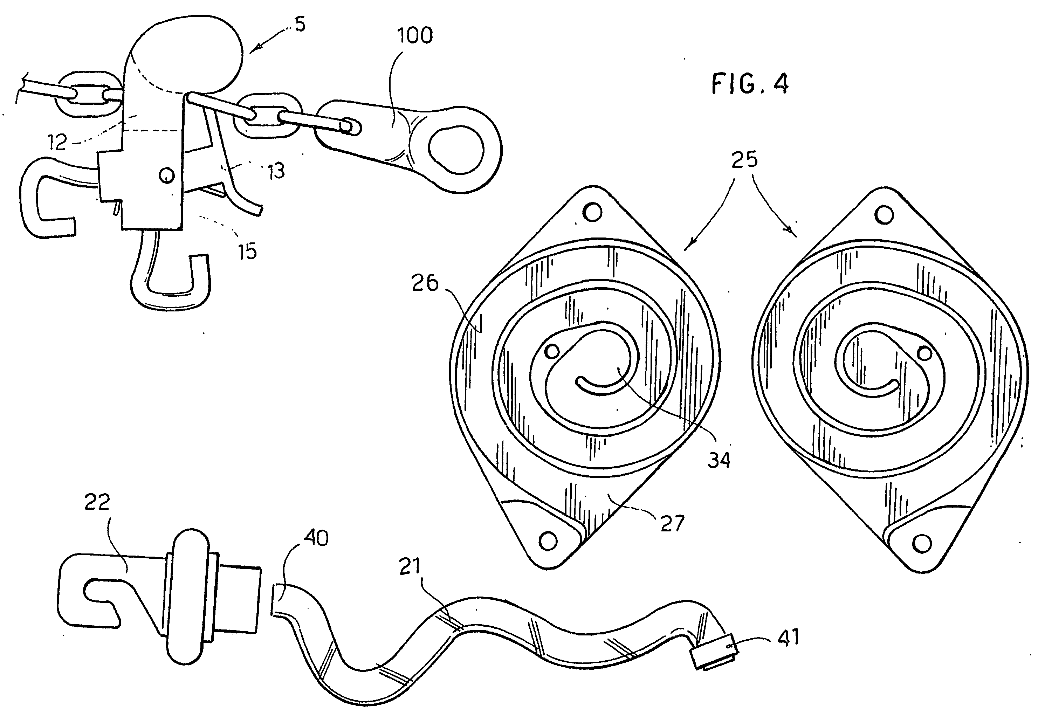

As better shown in Figures 3 and 4, the non-return block 5 comprises a hook 9 for hooking to the end 4 of the outer element 3, a hook 11 for hooking to a portion of the chain 10 and an opening 12 for passage of the terminal portion 7. A pawl 13 is pivoted at 15 to the non-return block. The pawl 13 is urged by a spring 14 against a link of terminal portion 7 and acts as a ratchet.

In practice, with reference to Figure 3, sliding of terminal portion 7 is allowed in the direction of the arrow F, when traction is exerted in this direction, whilst sliding in the opposite direction shown by the arrow R is prevented, and any slackening of the snow chain is thus prevented.

When the snow chain is to be removed, it is sufficient to exert manual pressure on one end 50 of the pawl 13 which, turning around the pivot 15, disengages the corresponding link of the terminal portion 7. The terminal portion 7 can therefore be pulled in the direction of the arrow R, slackening the chain 2.

A storage block 20 is mounted in the outer ring element 3, said storage block containing an elastic cable 21 ending in a hook 22 intended to hook to an engaging element 100 fixed at the free end of the terminal portion 7.

As shown in Figure 4, the storage block 20 comprises two substantially specular half-shells 25. Each half-shell 25 comprises a spiral seat 26, formed by a series of concentric coils of decreasing diameter disposed in a planar fashion.

The spiral seat begins with an opening 27 toward the outside of the shell 25 and ends with a widened seat 34 provided in a roughly central position in the shell. The spiral seat 26 has a concave shape such as to accommodate the elastic cable 21 that winds in a spiral therein.

The elastic cable 21 is constrained at one end 40 to the hook 22 and at the other end has a head 41 that is blocked in the widened seat 34 of the shell 25.

As shown in Figure 5, the elastic cable 21, starting from the head 41, passes along the spiral seat 26 and extends from the half-shell 25 through the opening 27 , in such a way that the end in which the hook 22 is fixed is situated outside the half-shell 25. At this point the other half-shell 25 can be mounted on the first half-shell 25 so as to form the storage block 20.

When the chains 2 must be mounted, the operator manually grasps the hook 22 and exerts traction on the elastic cable 21. The elastic cable 21 extends elastically sliding in the seat 26. At this point the elastic cable 21, as shown in Figure 1, is in a position of more or less maximum extension and the hook 22 can be hooked to the free end 100 of the terminal portion 7 when the chains 2 are slackened.

A first tensioning of the chains occurs through the manual action of the operator and through the elastic traction of the cable 21, which partially re-enters into the storage block 20, pulling with it the terminal portion 7. This first tensioning of the chains 2 is only partial since some portions of chain 10 blocked between the tread and the road surface cannot be tensioned. When the operator starts the vehicle, the chain portions 10 which before were blocked between the tread and the road surface are freed. Since the elastic traction of the elastic cable 21 is continuous, the terminal portion 7 will be further pulled by the elastic cable 21, causing tensioning also of the chain portions that had not been adequately tensioned before, as shown, for example, in Figure 2.

The spiral shape of the seat 26 made in the half-shells 25, besides lengthening the path of the elastic cable inside the storage block 20, permits smooth sliding of the cable, tangentially to the spirals of the seat 26, reducing friction to a minimum.

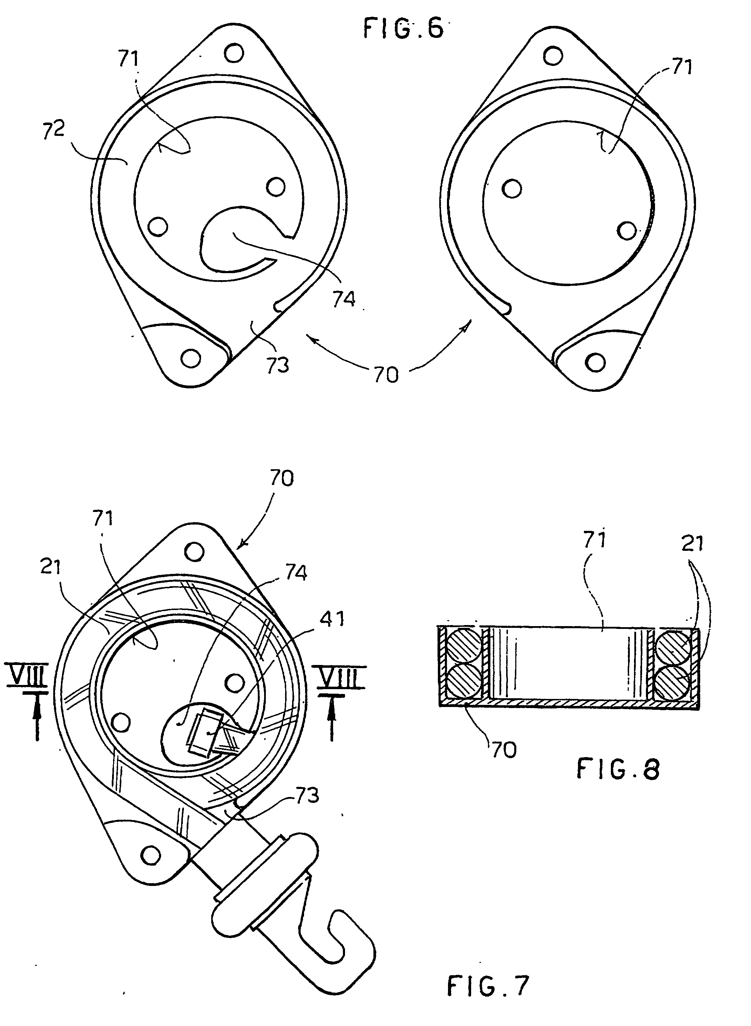

Figures 6-8 show a second embodiment of the storage block 20, in which the elastic cable 21 is wound therein with superimposed coils, instead of coplanar coils. Figure 6 shows two half-shells 70, at least one of which has, in a central position, a cylindrical tang 71 around which a ring-shaped seat 72 is formed. In at least one or both the half-shells 70, the ring-shaped seat 72 has an opening 73 which is directed toward the outside of the respective half-shell 70. Only one of the half-shells 70 has a widened seat 74 able to accommodate the head 41 of the elastic element 21.

As shown in Figures 7 and 8, the elastic element 21 is housed in the seat 72 and winds around the tang 71 in concentric, superimposed coils. A rotating ring, not shown, can be positioned around at least part of the tang 71, in particular around the tang of the half-shell not having the seat 74 for the head 41. The surface of said rotating ring in contact with the tang 71 is preferably made of anti-friction material, for example Teflon, so as to be able to turn freely around said tang. The elastic element 21 remains in close contact with the rotating ring and therefore the extension or contraction of the elastic element 21 causes rotation in one direction or in the other direction of the rotating ring.

## Claims

1. A self-tensioning device for snow chains (2) comprising an outer element (3) that can be closed in a ring, suitable to be placed on an outer side of a wheel (1), an inner element that can be closed like a ring, suitable to be placed on an inner side of the wheel (1), said inner and outer elements being linked by variously composed elements (10) achieving friction on the tread, said outer element (3) having a terminal portion (7) suitable to be pulled to tension the chain (2), a storage block (20) being provided on said outer element (3), said storage block (20) containing an elastic element (21) suitable to engage, tension and retain said terminal portion (7), after passage thereof in a non-return block (5) which allows sliding thereof only in a direction of tensioning of said chains (2) and not in an opposite direction of slackening, **characterized in that** said storage block (20) provides a spiral path (26) in which said elastic element (21) winds and slides, said spiral path being obtained by means of a spiral seat (26) formed by concentric coils with decreasing radius disposed on a same plane, said spiral seat (26) having an opening (27) toward the outside of the storage block (20) and a widened seat (34) disposed in a central position of the storage block, suitable to block an end of the elastic element (21).

2. A self-tensioning device for snow chains (2) comprising an outer element (3) that can be closed in a ring, suitable to be placed on an outer side of a wheel (1), an inner element that can be closed like a ring, suitable to be placed on an inner side of the wheel (1), said inner and outer elements being linked by variously composed elements (10) achieving friction on the tread, said outer element (3) having a terminal portion (7) suitable to be pulled to tension the chain (2), a storage block (20) being provided on said outer element (3), said storage block (20) containing an elastic element (21) suitable to engage, tension and retain said terminal portion (7), after passage thereof in a non-return block (5) which allows sliding thereof only in a direction of tensioning of said chains (2) and not in an opposite direction of slackening, **characterized in that** said storage block (20) provides a spiral path (72) in which said elastic element (21) winds and slides, said spiral path being formed by a ring-shaped seat (72) in which the elastic element (21) winds in superimposed coils having the same diameter.

3. A device according to claim 2, **characterized in that** said ring-shaped seat (72) is obtained by means of a cylindrical tang (71) disposed in a central position in the storage block (20), around which the elastic element is wound in superimposed coils having a same diameter.

4. A device according to claim 3, **characterized in that** a rotating ring is provided, mounted rotatably around said tang (71) in such a manner that the elastic element (21) remains in close contact with said rotating ring and said rotating ring is free to turn around the tang (71).

5. A device according to claim 4, **characterized in that** the contact surfaces between said rotating ring and said tang (71) are made of a material having a low coefficient of friction.

6. A device according to any one of the preceding claims, **characterized in that** said storage block is formed by two substantially specular half-shells (25; 70).

7. A device according to any one of the preceding claims, **characterized in that** said non-return block (5) is mounted on said outer element (3) that can be closed in a ring.

8. A device according to any one of the preceding claims, **characterized in that** said non-return device (5) comprises a pawl (13) urged by a spring means (14) that pushes it against said terminal portion (7), acting as a ratchet, said pawl (13) being manually operable to allow sliding of the terminal portion (7) in the direction of slackening of the chains (2).

## Patentansprüche

1. Eine Selbstspannungsvorrichtung für Schneeketten (2), die ein äußeres Element (3) umfasst, das in Form eines Rings geschlossen werden kann und geeignet ist, an der Außenseite des Rads (1) angebracht zu werden, ein inneres Element, das wie ein Ring geschlossen werden kann und geeignet ist, an der Innenseite des Rads (1) angebracht zu werden, wobei die genannten inneren und äußeren Elemente durch unterschiedlich zusammengesetzte Elemente (10) verbunden sind, welche die Reibung an der Lauffläche herstellen, und das genannte äußere Element (3) einen Endabschnitt (7) aufweist, der geeignet ist, entsprechend gezogen zu werden, um die Kette (2) in Spannung zu versetzen, einen Lagerblock (20), der an dem genannten äußeren Element (3) vorgesehen ist, wobei der genannte Lagerblock (20) ein elastisches Element (21) enthält, das geeignet ist, den genannten Endabschnitt (7) einzuklinken, zu spannen und zurückzuhalten, und zwar nach dessen Übergang in einen Rückschlagblock (5), der dessen Verschiebung nur in die Spannungsrichtung der genannten Ketten (2) und nicht in die entgegen gesetzte Lockerungsrichtung gestattet, **dadurch gekennzeichnet, dass** der genannte Lagerblock (20) eine Spiralbahn (26) vorsieht, in der das genannte elastische Element (21) sich aufwickelt und gleitet, wobei die genannte Spiralbahn durch einen Spiralsitz (26) erzielt wird, der durch konzentrische Windungen mit abnehmendem Radius erzielt wird, welche auf derselben Ebene angeordnet sind, wobei der genannte Spiralsitz (26) jeweils eine Öffnung (27) in Richtung der Außenseite des Lagerblocks (20) und einen verbreiterten Sitz (34) aufweist, der in einer zentralen Stellung des Lagerblocks angeordnet und geeignet ist, ein Ende des elastischen Elements (21) zu blockieren.

2. Eine Selbstspannungsvorrichtung für Schneeketten (2), die ein äußeres Element (3) umfasst, das in Form eines Rings geschlossen werden kann und geeignet ist, an einer Außenseite eines Rads (1) angebracht zu werden, ein inneres Element, das wie ein Ring geschlossen werden kann und geeignet ist, an einer inneren Seite des Rads (1) angebracht zu werden, wobei die genannten inneren und äußeren Elemente durch unterschiedlich zusammengesetzte Elemente (10) verbunden sind, welche die Reibung an der Lauffläche herstellen, und das genannte äußere Element (3) einen Endabschnitt (7) aufweist, der geeignet ist, gezogen zu werden, um die Kette (2) in Spannung zu versetzen, einen Lagerblock (20), der auf dem genannten äußeren Element (3) vorgesehen ist, wobei der genannte Lagerblock (20) ein elastisches Element (21) enthält, das geeignet ist, den genannten Endabschnitt (7) einzuklinken, zu spannen und zurückzuhalten, und zwar nach dessen Übergang in einen Rückschlagblock (5), der dessen Verschiebung nur in die Spannungsrichtung der genannten Ketten (2) und nicht in eine entgegengesetzte Lockerungsrichtung gestattet, **dadurch gekennzeichnet, dass** der genannte Lagerblock (20) eine Spiralbahn (72) vorsieht, in der das genannte elastische Element (21) sich aufwickelt und gleitet, wobei die genannte Spiralbahn durch einen ringförmigen Sitz (72) gebildet wird, in dem das elastische Element (21) sich in übereinander liegenden Windungen desselben Durchmessers aufwickelt.

3. Eine Vorrichtung gemäß Anspruch 2, **dadurch gekennzeichnet, dass** der genannte ringförmige Sitz (72) mit Hilfe eines zylindrischen Zapfens (71) erzielt wird, der in zentraler Stellung im Lagerblock (20) angeordnet ist, um den das elastische Element in übereinander liegenden Windungen des gleichen Durchmessers gewickelt ist.

4. Eine Vorrichtung gemäß Anspruch 3, **dadurch gekennzeichnet, dass** ein drehbarer Ring vorgesehen ist, der drehbar um den genannten Zapfen (71) montiert ist, und zwar so, dass das elastische Element (21) in engem Kontakt mit dem genannten drehbaren Ring bleibt und dieser drehbare Ring frei ist, sich um den Zapfen (71) zu drehen.

5. Eine Vorrichtung gemäß Anspruch 4, **dadurch gekennzeichnet, dass** die Kontaktflächen zwischen dem genannten drehbaren Ring und dem genannten Zapfen (71) aus einem Material bestehen, das einen niedrigen Reibungskoeffizienten aufweist.

6. Eine Vorrichtung gemäß einem beliebigen der vorausgegangenen Ansprüche, **dadurch gekennzeichnet, dass** der genannte Lagerblock aus zwei im wesentlichen spiegelbildlichen Halbschalen (25, 70) besteht.

7. Eine Vorrichtung gemäß einem beliebigen der vorausgegangenen Ansprüche, **dadurch gekennzeichnet, dass** der genannte Rückschlagblock (5) an dem genannten äußeren Element (3) montiert ist, das ringförmig geschlossen werden kann.

8. Eine Vorrichtung gemäß einem beliebigen der vorausgegangenen Ansprüche, **dadurch gekennzeichnet, dass** die genannte Rückschlagvorrichtung (5) eine Sperrklinke (13) umfasst, die durch ein Federelement (14) gespannt wird, das sie gegen den genannten Endabschnitt (7) drückt und wie ein Sperrkegel wirkt, wobei die genannte Sperrklinke (13) von Hand betätigt werden kann, um die Verschiebung des Endabschnitts (7) in der Richtung der Kettenlockerung (2) zu gestatten.

## Revendications

1. Dispositif de mise en tension automatique pour chaînes à neige (2) comprenant un élément extérieur (3) qui peut être verrouillé en anneau, prévu pour être placé sur une partie extérieure d'une roue (1), un élément intérieur qui peut être verrouillé comme un anneau, prévu pour être placé sur une partie intérieure de la roue (1), lesdits éléments extérieur et intérieur étant reliés par des éléments composés de différentes façons (10) réalisant la friction sur la bande de roulement, ledit élément extérieur (3) ayant une section finale (7) prévue pour être tirée pour mettre en tension la chaîne (2), un bloc de stockage (20) étant prévu sur ledit élément extérieur (3), ledit bloc de stockage (20) contenant un élément élastique (21) prévu pour engager, tendre et retenir ladite portion finale (7), après le passage de celui-ci dans un bloc de non-retour (5) lui permettant de coulisser uniquement dans le sens de la mise en tension desdites chaînes (2) et pas dans le sens opposé de relâchement, **caractérisé en ce que** ledit bloc de stockage (20) prévoit un chemin spiroïdal (26) où ledit élément élastique (21) s'enroule et coulisse, ledit chemin spiroïdal étant obtenu au moyen d'un logement spiroïdal (26) formé de spires concentriques à rayon décroissant placées sur le même plan, ledit logement spiroïdal (26) ayant une ouverture (27) vers l'extérieur du bloc de stockage (20) et un logement élargi (34) placé dans une position centrale du bloc de stockage, prévu pour bloquer une extrémité de l'élément élastique (21).

2. Dispositif de mise en tension automatique pour chaînes à neige (2) comprenant un élément extérieur (3) qui peut être verrouillé en anneau, prévu pour être placé sur une partie extérieure d'une roue (1), un élément intérieur qui peut être verrouillé comme un anneau, prévu pour être placé sur une partie intérieure de la roue (1), lesdits éléments extérieur et intérieur étant reliés par des éléments composés de différentes façons (10) réalisant la friction sur la bande de roulement, ledit élément extérieur (3) ayant une section finale (7) prévue pour être tirée pour mettre en tension la chaîne (2), un bloc de stockage (20) étant prévu sur ledit élément extérieur (3), ledit bloc de stockage (20) contenant un élément élastique (21) prévu pour engager, tendre et retenir ladite portion finale (7), après le passage de celui-ci dans un bloc de non-retour (5) lui permettant de coulisser uniquement dans le sens de la mise en tension desdites chaînes (2) et pas dans le sens opposé de relâchement, **caractérisé en ce que** ledit bloc de stockage (20) prévoit un chemin spiroïdal (72) où ledit élément élastique (21) s'enroule et coulisse, ledit chemin spiroïdal étant formé d'un logement en forme d'anneau (72) où l'élément élastique (21) s'enroule en spires superposées ayant le même diamètre.

3. Dispositif selon la revendication 2, **caractérisé en ce que** ledit logement en forme d'anneau (72) est obtenu au moyen d'une queue cylindrique (71), placée dans une position centrale dans le bloc de stockage (20), autour de laquelle l'élément élastique est enroulé en spires superposées ayant le même diamètre.

4. Dispositif selon la revendication 3, **caractérisé en ce qu'**un anneau tournant, monté de façon à tourner autour de ladite queue (71), est prévu de manière que l'élément élastique (21) reste en contact étroit avec ledit anneau tournant et ledit anneau tournant soit libre de tourner autour de la queue (71).

5. Dispositif selon la revendication 4, **caractérisé en ce que** les surfaces de contact entre ledit anneau tournant et ladite queue (71) sont réalisées dans un matériau à bas coefficient de friction.

6. Dispositif selon une revendication quelconque parmi les revendications susmentionnées, **caractérisé en ce que** le bloc de stockage est formé de deux demi-coques substantiellement spéculaires (25 ; 70).

7. Dispositif selon une revendication quelconque parmi les revendications susmentionnées, **caractérisé en ce que** le bloc de non-retour (5) est monté sur ledit élément extérieur (3) qui peut être verrouillé en anneau.

8. Dispositif selon une revendication quelconque parmi les revendications susmentionnées, **caractérisé en ce que** le dispositif de non-retour (5) comprend un cliquet (13) sollicité par un dispositif à ressort (14) qui le pousse contre ladite section finale (7), agissant comme un rochet, ledit cliquet (13) pouvant être actionné manuellement pour permettre le coulissement de la section finale (7) dans le sens de relâchement des chaînes (2).
